# EUROPEAN PATENT SPECIFICATION

(11) **EP 4 359 138 B1**
(45) Date of publication and mention of the grant of the patent: **07.05.2025**
(21) Application number: 22734372.0
(22) Date of filing: 20.06.2022
(51) Int. Cl.: B02C 7/06, A23G 1/00, A23G 1/12, B02C 7/175

(54) **IMPROVED TYPE FOOD REFINING MACHINERY**
VERBESSERTE LEBENSMITTELRAFFINATIONSMASCHINE
ÉQUIPEMENT DE RAFFINAGE D'ALIMENTS DE TYPE AMÉLIORÉ

(30) Priority: 25.06.2021 IT 202100016682
(43) Date of publication of application: 01.05.2024
(73) Proprietor: Conversi S.r.l., 41011 Campogalliano (MO) (IT)
(72) Inventor: CONVERSI, Andrea, 37019 Peschiera del Garda (VR) (IT)
(74) Representative: Cipolletti, Serena
(86) International application number: PCT/IB2022/055696
(87) International publication number: WO 2022/269454

(56) References cited:
- WO-A1-2014/208967
- US-A- 6 129 008

## Description

### Technical Field

The present Invention is revealed within those techniques of food refining of seeds of some plants as cocoa, peanuts, hazelnuts etc. In particular, the device, result of the present Invention, perfects said application for small-to-medium quantities, avoiding the use of expensive machinery designed for large production lines.

The refining put in place by the device produces food spreads and food emulsions from processing a raw material in grain form, which is widely used and available in the food industry.

### Background Art

The industrial processes for processing cocoa beans, peanuts, hazelnuts etc. are well known in the State of the Art of technology. One of these processes involves shredding the food matter until a small grain purified of any waste and/or rejects and properly sanitized is obtained.

This semi-finished product comes to constitute the raw material that feeds a series of devices called "refiners", which make it possible to obtain, from this raw material, a finished product in the form of an emulsion of spreadable cream, in turn usable for the production of various foods, such as, for example, chocolates and spreadable creams.

The refiners are mechanical devices that crush the food grain until the fatty substances in it are released. The solid elements are crushed and reduced to dimensions in the micrometre range (10⁻⁶ meters).

Water, fatty substances and solid elements processed by refiners thus all together form an emulsion or spreadable cream that can be reused in further processes to create the aforementioned food products.

There are various constructive types of refiners on the market, which put in place different procedures for obtaining the semi-finished food product derived from plant seeds.

In Application (IT) 102018000005272 is unveiled a refiner mainly made up of a rotating notched disc (21, Prior Art) inserted inside two fixed facing plates, also equipped with serrations, which, fed by the food grain, appropriately crush that grain food to obtain the emulsion.

The layout proposed in the Application (IT) 102018000005272 is undoubtedly highly effective but it also presents a great complexity and large size of the device, well justified in a purely industrial field of use.

In the Application (IT) 102009901754484 is unveiled a refiner that does not use notched and facing discs, but rather rollers inserted is special fifth wheels driven by a drive shaft, which form multiple and repeated crushing environments for the food grain.

The layout of Application (IT) 102009901754484 is designed for the production of large quantities of food emulsion and presents a structural complication that is always justified by the particular field of application. The Application US6129008A reveal a refiner for large production without the necessary tuned technical aspect for a small sized device. Application WO2014208967A1 reveal an integrated crushing, solid-liquid separation and compression dewatering apparatus for food waste disposal, that is a general-purpose machine not tuned for food seeds with a simplified small-to-medium-sized layout.

There are also, commercially available, refiners called "spheres" or "marbles" refiners ("www.selmi-group.com/micron-25-spreadable-creams-ball-refiner.htlm" and "www.tecno-3.it/prodotto_3_16.htlm") which consist of a metal container containing hundreds of metal balls which, once in motion by means of one or more mechanical paddles, create the necessary friction to break up the food grain and transform it into spreadable cream or emulsion of it.

Ball refiners, however, present the disadvantage of food contamination, due to mechanical wear of the metal spheres, wear that results in metal powder diluted inside the processed product.

This makes the replacement of balls within the machine frequent, and even this refiner layout is only geared towards and attractive to large production chains.

The scope of this Invention is therefore the design of a refiner for food seeds with a simplified small-to-medium-sized layout, which can be used in areas not dedicated to large-scale industrial production and which has advantages and peculiarities that make it advantageous to use.

### Summary of Invention

The device, result of the present Invention, is made up of a machine body which implements a cylindrical container, horizontally fixed.

On the inner surface of the cylindrical container, groups of rotating rollers operate by friction, according to a programmable force from one or more spring push elements, which are integral with the rotation transmitted by a central rotating shaft connected to one or more mechanical joining segments between the roller assemblies and the aforementioned central rotating shaft.

### Advantageous Effects of Invention

The device, result of the present Invention, has the following advantages:
a. it allows to obtain food spreadable creams and food emulsions without the use of large production machinery,
b. it is characterized by a simplified layout for an easy maintenance and an easy use,
c. temperature control allows achieving an optimal result not achievable with other non-professional machines.

### Brief Description of Drawings

The drawings table is integrated in the documents of this application in order to exemplify the characteristics of the device, even highlighting variations in the application described therein; in this case it reveals:
**Fig.1**

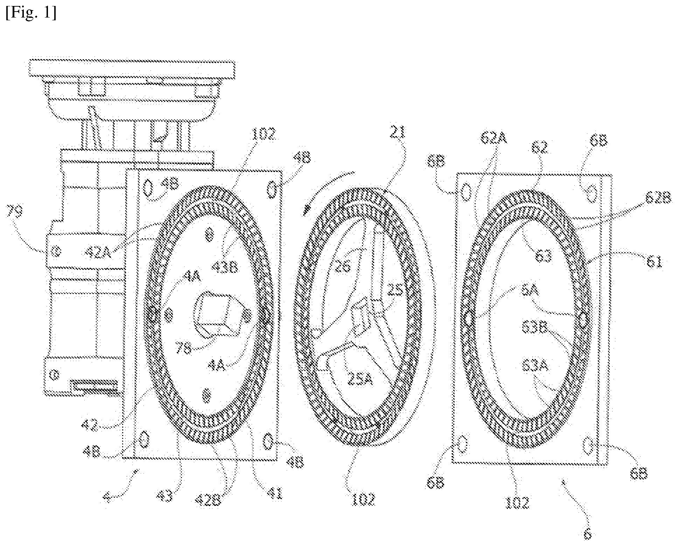

   [fig.1] shows Prior Art (IT) 102018000005272,
**Fig.2**

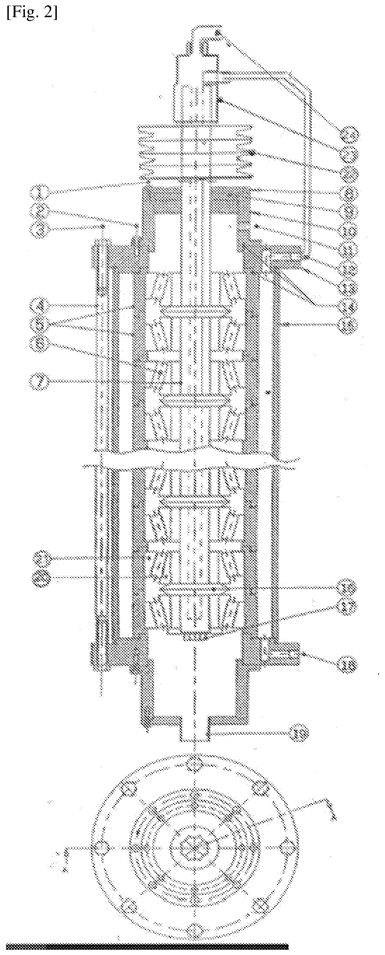

   [fig.2] shows Prior Art (IT) 102009901754487,
**Fig.3**

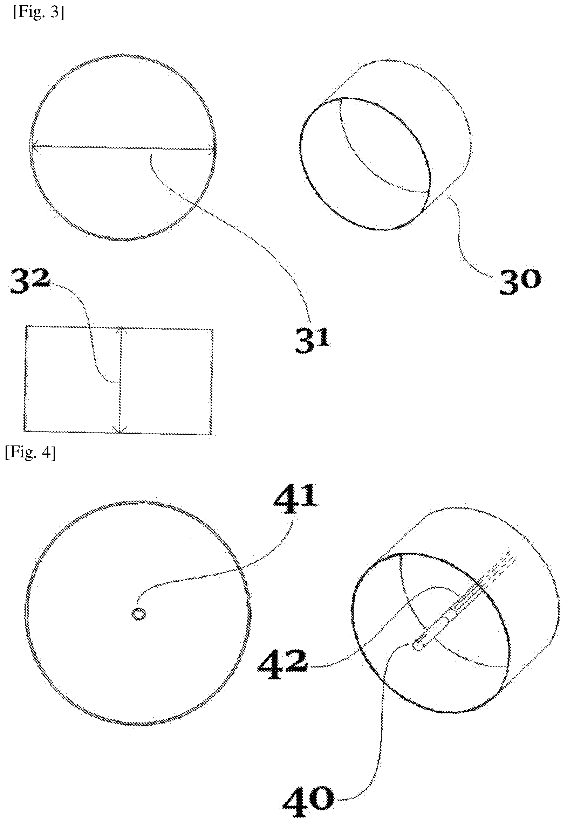

   [fig.3] shows the cylindrical processing chamber result of the present Invention,
**Fig.4**
   [fig.4] shows the rotating shaft, result of the present Invention,
**Fig.5**

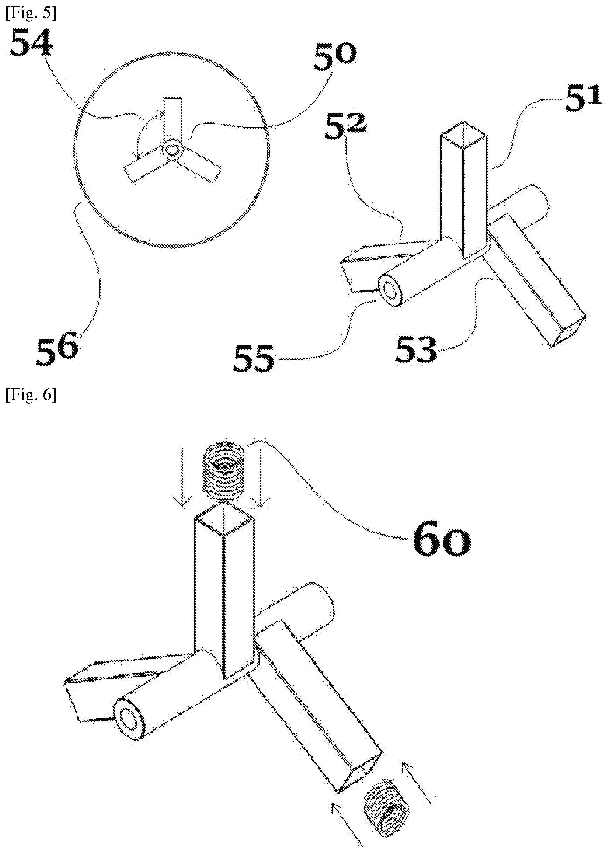

   [fig.5] shows the element consisting of the segments spaced 120° apart result of the present Invention,
**Fig.6**
   [fig.6] shows the elastic thrust springs result of the present Invention,
**Fig.7**

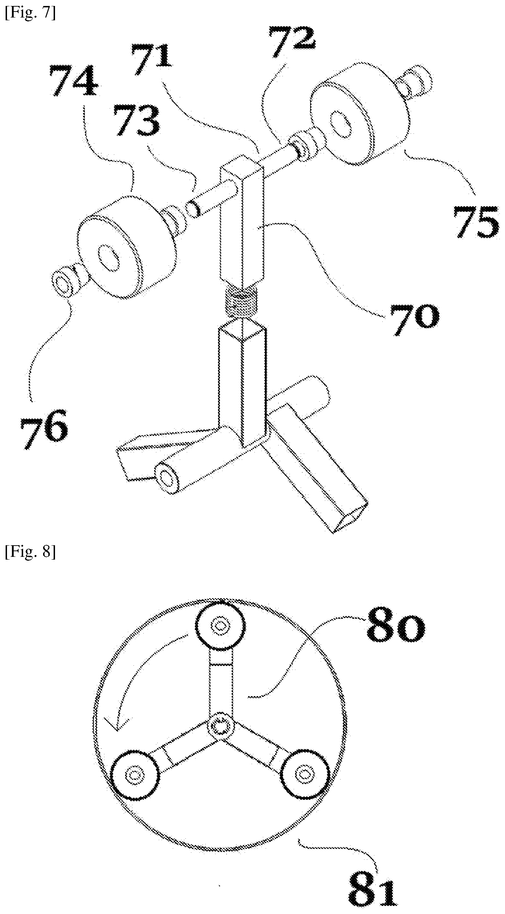

   [fig.7] shows the rotation roller group, result of the present Invention,
**Fig.8**
   [fig.8] shows a side view of the cylindrical processing chamber, result of the present Invention,
**Fig.9**

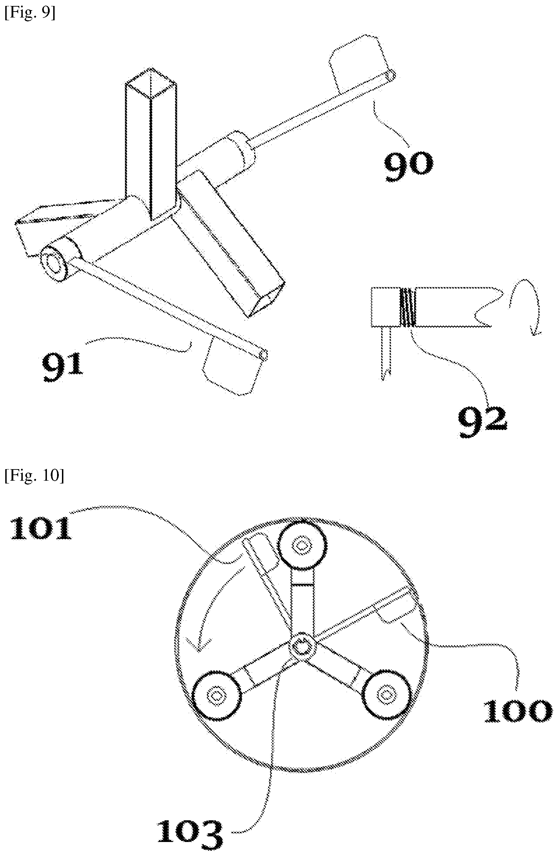

   [fig.9] shows the scraping blades, result of the present Invention,
**Fig.10**
   [fig.10] shows the scraping blades assembled on the rotating shaft, result of the present Invention,
**Fig.11**

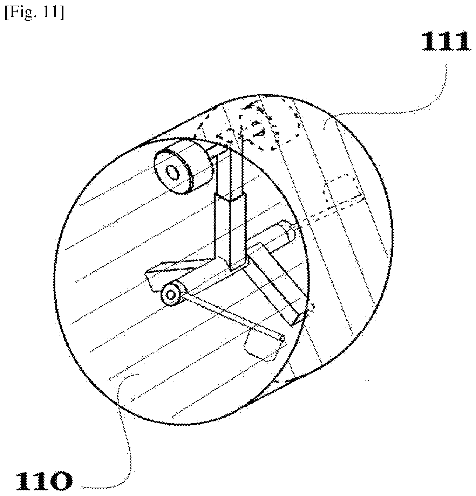

   [fig.11] in which the area of the surfaces, worked by the scraping blades, is highlighted,
**Fig.12**

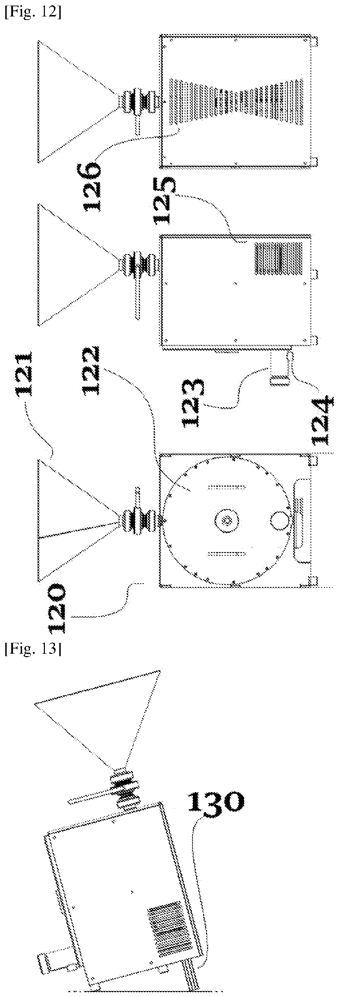

   [fig.12] shows an overall view of the front, side and rear of the device, result of the present Invention,
**Fig.13**
   [fig.13] shows the mechanism that allows tilting the device, result of the present Invention.

### Description of Embodiments

] The description of the different forms of realization of this invention is revealed here for illustrative purpose and it is not intended to be completely exhaustive or limited to the form of realization described therein.

Moreover, all possible modification of an obvious nature of the Invention and its field of application, put in place by persons experienced in the field, do not limit the terms of the license itself.

The weight, length and pressure parameters of this description comply with the International System of Units (S.I.).

According to the form of realization of the Invention the grain processing chamber is made up of a metallic cylinder put in the machine in a horizontal position (30), i.e. parallel to the supporting surface of the machine result of the present Invention.

The dimensions of the cylindrical processing chamber can vary, depending on the desired application, in a range from 20 cm to 50 cm in diameter, preferably 35 cm (31) and a length between 10 cm and 35 cm, preferably 20 cm (32).

According to the form of realization of the Invention in the centre of the cylindrical processing chamber there is a rotation shaft (40) (41), driven by a motor outside the chamber. The rotating shaft has appropriate housings (42) on which one or more mechanical segments of junction will be fitted to join the rotating roller assembly.

According to the form of realization of the Invention are then arranged some junction mechanical segments (50), made up of groups of three mechanical segments (51) (52) (53), hollow and spaced at an angle of 120° (54), joined at one end to a central hollow cylindrical shaft (55), prepared to be inserted on the rotating shaft inside the cylindrical processing chamber (56).

According to the form of realization of the Invention an elastic thrust device, consisting of a mechanical spring, is inserted into each of the three hollow mechanical joint segments (60). The above-mentioned elastic thrust device will produce the appropriate force on the roller rotating assembly towards the inner surface of the cylindrical processing chamber, in order to crush and crumble the food grain interposed between the aforementioned rotating rollers and the inner wall of the cylindrical processing chamber.

According to the form of realization of the Invention, each one of the hollow mechanical joint segments fitted with the mechanical spring is capable of housing an end pivot (70) inside, so as to form a sliding joint along an axial direction; the mechanical spring, interposed between segment and pivot, can thus exert its outward thrust.

According to the form of realization of the Invention the terminal pivot intersects with a further segment, that is fixed orthogonally to the axis of the aforementioned pivot (71), at the side ends (72) (73) of which two or more rotating rollers are assembled (74) (75) by means of special anti-friction brushings (76). The distance between the centre of the rotating of the rotating shaft and the outer surface of the rotating rollers is such that it compresses the elastic mechanical springs when placed inside the cylindrical processing chamber.

In Fig.8 a side view of the cylindrical processing chamber is revealed (81), complete with its mechanical joint segments and three groups of rotating rollers spaced 120° apart (80).

The food grain, subjected to the crushing process by the rotating rollers, releases its fat content inside the cylindrical processing chamber; nevertheless, the spreadable cream thus formed will partly tend to stick to the sidewalls of the aforementioned cylindrical processing chamber, that is to say those areas of the chamber's surface not processed by the rotating rollers, thus making it impossible a correct processing of all the ingredient contained in the above-mentioned chamber.

According to the form of realization of the Invention, for the purpose of conveniently mixing the spreadable cream, two or more scraping blades are applied for the front and the rear walls of the cylindrical processing chamber (90) (91), in contact with it, integral with the central hollow cylindrical shaft, from which they appropriately take the rotatory motion by segments built with synthetic or metallic material. Optionally, the above-mentioned blades can be integral with the rotating shaft. The adequate pressure to the side walls of the above-mentioned cylindrical processing chamber is performed by suitable thrust springs (92) assembled between the scraping blades and the rotating shaft.

Fig.10 shows a side view of the cylindrical processing chamber with the the scraping blades (101) (103) integral with the cylindrical hollow central shaft (103).

Fig.11 highlights more the area of the cylindrical processing chamber's sidewalls where the spreadable cream accumulation can occur, i.e. the ones not processed by the rotating rollers, so the portion of the front area (110)] and the rear one (111).

According to the form of realization of the Invention, to ease the production of an emulsion or a spreadable cream from food grain crushing, the cylindrical processing chamber is enveloped by an electrical resistive element that can raise the temperature inside the above-mentioned chamber, if necessary, during a processing cycle. This increase in temperature from the ambient one is particularly necessary in the first moments of processing; an excessive temperature level of the spreadable cream, due to friction processes during the processing cycle, however, is averted by the size ration of the device resulting from the present Invention, dimensions that allow for adequate dissipation of excessive heat. To ease this, there are adequate air circulation openings in the external chassis of the device.

The food grain is inserted in the cylindrical processing chamber through an upper opening connected to e removable conical hopper (121), which allows the food material to be conveniently discharged.

According to the form of realization of the Invention, the cylindrical processing chamber is hosted inside a chassis in the shape of a parallelepiped (120), so that its length is parallel to the work surface; the rotating rollers then work with a rotational movement, perpendicular to the work surface along the circumference of the aforementioned chamber.

According to the form of realization of the Invention the front wall of the cylindrical processing chamber can be opened by the user thanks to a lid (122), on the bottom of which there is an opening (124) leading to a tap. From this tap the spreadable cream, prepared by the processing cycle of the device, can flow. This opening enables both the device maintenance operations and cleaning and retention activities of the same. Moreover, the lid of the processing chamber front wall has, in the centre, a housing for the support of the rotation shaft. The rear wall of the cylindrical processing chamber is closed and geared with a central perforation and a bushing for the presence of the rotation shaft on which the mechanical joint segments and the end pivots with their respective sets of rotating rollers are attached. The surface of the openable front wall and the surface of the rear wall of the cylindrical processing chamber are worked by the scraping blades. In addition, in Fig. 12 the side (125) and the rear (126) openings are visible. They allow the correct ventilation and temperature management of the device during the processing cycle, as stated in chapter [0048].

According to the form of realization of the Invention the driving force required for the roundabout movement of the central shaft is provided by an electric motor house externally and equipped with a logic control circuit managed by a microprocessor, such that the rotation speed can be varied at will according to the processing requirements set by the user.

The logic circuit arranged, according to the form of realization of the Invention, also controls some device operating parameters, as the cylindrical processing chamber temperature, parameters measured through connection to one or more temperature sensors, the management of electrical resistance, as well as the processing times of the food grain. The logic management system is equipped with an interface for data entry by the user, including touch interface.

The manufacturing of food seeds by the device result of the present Invention allows producing spreadable creams with suspended elements of the order of tens of micrometres in size (10⁻⁶ meters) without the use of bulky machinery designed for large-scale industrial production.

According to the form of realization of the Invention, the constituent materials of the rotating rollers that perform the crushing on the food grain can be made of different materials, or coated with them, in order to adapt to different types of raw material to be processed; this construction, or coating, can be achieved with stainless steel, stone etc.

According to the form of realization of the Invention, even the inside of the cylindrical processing chamber can be coated with the same range of suitable materials, compatible with contact with food substances.

Moreover, according to the form of realization of the Invention, the rotation of the rotating shaft can be reversed to ease the ejection of the spreadable cream from the lower opening of the cylindrical processing chamber's lid. This opposite rotation, in fact, allows the scraping blades to push the spreadable cream towards the opening provided with tap.

According to the form of realization of the Invention, moreover, a mechanical set-up via lever is provided on the opposite side of the one of the cylindrical processing chamber's lid, to tilt the machine body, relative to the work surface by a maximum angle of 30 degrees. This inclination can a reach a maximum angle of 45 degrees towards the vertical axis (130).

### Industrial Applicability

The application of choice of the device, result of the present Invention, is that of production of small and medium quantities of spreadable creams and food emulsions, obtained by controlled crushing of seeds, i.e. peanuts, cocoa, pistachio nuts, walnuts, hazelnuts etc.; however, it can also be used with other food raw materials that require similar mechanical processing.

### Citation List

Citation List follows: no citation.

### Patent Literature

PTL1: IT 102018000005272
PTL2: IT 102009901754484
PTL3: US6129008A
PTL4: WO2014208967A1

### Non Patent Literature

NPTL1: www.selmi-group.com/micron-25-spreadable-creams-ball-refiner.htlm
NPTL2: www.tecno-3.it/prodotto_3_16.htlml

## Claims

1. Refining machine of raw material consisting of seeds and / or granulated vegetable substances making the spreadable creams and / or emulsions by crushing, composed by a parallelepiped-shaped metal chassis equipped with an upper opening connected to a removable conical hopper and a raw material processing chamber within:
a. the raw material processing chamber (30) is made of cylindrical metal, closed on one side, with a diameter between 20cm and 50cm, rather 35cm, and a length between 10cm and 35cm, rather 20cm,
b. the length axis of the cylindrical processing chamber is placed horizontally to the work surface,
c. the cylindrical processing chamber is equipped with an electrical resistance and one or more temperature sensors.
d. the closed side of the cylindrical processing chamber has a central opening in which a rotation shaft (40) is fitted by means of an anti-friction bushing,
e. a hollow cylindrical shaft is fitted concentrically on the rotation shaft,
f. the hollow cylindrical shaft is integral with three empty segments tops (51)(52)(53) spaced of an angle of 120° (55),
g. three elastic mechanical springs (60) are fitted inside the three empty segments (51)(52)(53),
h. three pivots (70) are mounted inside the empty segment tops, fitted with the elastic mechanical springs placed between the empty segment and the pivot, so that the mechanical elastic spring push out,
i. an orthogonal segment is integral to the head of each pivot (70) of which at the tops two rotating rollers (74)(75) are fitted with two anti-friction bushings,
j. the distance between the rotation shaft center and the rotating rollers outer surface is such as to compress the elastic mechanical springs placed between the empty segment and the pivot,
k. the opened side of the cylindrical processing chamber is closed by a lid, designed to fit the rotation shaft top,
l. near the rotation shaft top and inside the cylindrical chamber, two or more scraping blades (90)(91) are fixed by means of two segments of metal or synthetic material, pushed outwards by one or more mechanical springs (92).
m. the scraper blade operating near the cylindrical processing chamber lid is fitted so that one side of the aforementioned blade is tangent to the lid surface,
n. the blade operating on the cylindrical processing chamber closed side is fitted so that the aforementioned blade is tangent to the closed side surface of the cylindrical processing chamber.

2. Refining machine of the Claim 1 in which the rotating rollers are made of metal or stone or other synthetic material compatible with food uses.

3. Refining machine of the Claim 1 in which the internal cylindrical processing chamber surface and / or on the surface of the rotating rollers is fitted a coating in stone or synthetic material compatible with food uses.

4. Refining machine of the Claim 1 in which the cylindrical processing chamber lid has a lower opening (123) connected to a tap (124).

5. Refining machine of the Claim 1 equipped with an electric motor connected to the rotation shaft in which the rotation speed is controlled by a logic circuit programmable by the user, by means of a microprocessor with a user interface for data-entry, also touch type.

6. Refining machine of the Claim 5 in which the logic circuit manages the temperature sensor and the electrical resistance sensor on the cylindrical processing chamber.

7. Refining machine of the Claim 1 in which the motion path of the rotation shaft can be reversed for the spreadable cream expulsion from the appropriate lower opening on the cylindrical processing chamber lid.

8. Refining machine of the Claim 1 equipped in the external chassis with special side slits for the air exchange between the outside and the inside (125)(126).

9. Refining machine of the Claim 1 equipped with a mechanical predisposition by means of a lever on the opposite side to that of the side lid of the cylindrical processing chamber, to tilt the machine body with respect to the work surface by a maximum angle of 30 degrees (130).

## Patentansprüche

1. Maschine zur Veredelung von Rohstoffen, die aus Samen und/oder granulierten pflanzlichen Stoffen bestehen, zur Herstellung von streichfähigen Cremes und/oder Emulsionen durch Zerkleinerung, bestehend aus einem parallelflachen Metallgehäuse, das mit einer oberen Öffnung, die mit einem abnehmbaren konischen Trichter verbunden ist, und einer darin befindlichen Rohstoffverarbeitungskammer ausgestattet ist:
a. die Rohstoffverarbeitungskammer (30) ist aus zylindrischem Metall, einseitig geschlossen, mit einem Durchmesser zwischen 20 cm und 50 cm, eher 35 cm, und einer Länge zwischen 10 cm und 35 cm, eher 20 cm,
b. die Längsachse der zylindrischen Verarbeitungskammer ist horizontal zur Arbeitsfläche angeordnet,
c. die zylindrische Verarbeitungskammer ist mit einem elektrischen Widerstand und einem oder mehreren Temperatursensoren ausgestattet.
d. die geschlossene Seite der zylindrischen Verarbeitungskammer weist eine zentrale Öffnung auf, in der eine Drehwelle (40) mit Hilfe einer Gleitbuchse angebracht ist,
e. eine zylindrische Hohlwelle ist konzentrisch auf der Drehwelle angebracht,
f. die zylindrische Hohlwelle ist mit drei leeren Segmenten verbunden (51)(52)(53), die in einem Winkel von 120° (55) angeordnet sind,
g. drei elastische mechanische Federn (60) sind in den drei leeren Segmenten (51)(52)(53) angebracht,
h. drei Drehzapfen (70) sind im Inneren der leeren Segmente montiert, die mit elastischen mechanischen Federn ausgestattet sind, die zwischen dem leeren Segment und dem Drehzapfen platziert sind, so dass die mechanische elastische Feder herausgedrückt wird,
i. am Kopf jedes Drehzapfens (70) ist ein orthogonales Segment befestigt, an dessen oberen Enden zwei drehbare Rollen (74)(75) mit zwei Gleitbuchsen versehen sind,
j. der Abstand zwischen dem Zentrum der Drehwelle und der Außenfläche der Drehrollen ist so groß, dass die elastischen mechanischen Federn zwischen dem leeren Segment und dem Drehzapfen zusammengedrückt werden,
k. die geöffnete Seite der zylindrischen Verarbeitungskammer wird durch einen Deckel verschlossen, der so gestaltet ist, dass er auf die Oberseite der Drehwelle passt,
l. in der Nähe des oberen Teils der Drehwelle und im Inneren der zylindrischen Kammer sind zwei oder mehr Schabmesser (90)(91) mit Hilfe von zwei Segmenten aus Metall oder synthetischem Material befestigt, die durch eine oder mehrere mechanische Federn (92) nach außen gedrückt werden.
m. das Schabmesser, das in der Nähe des Deckels der zylindrischen Verarbeitungskammer arbeitet, ist so angebracht, dass eine Seite des genannten Schabmesser die Oberfläche des Deckels tangiert,
n. das auf der geschlossenen Seite der zylindrischen verarbeitungskammer arbeitende Schabmesser ist so angebracht, dass das vorgenannte Schabmesser die geschlossene Seitenfläche der zylindrischen Verarbeitungskammer tangiert.

2. Maschine zur Veredelung nach Anspruch 1, bei der die rotierenden Walzen aus Metall, Stein oder einem anderen lebensmittelverträglichen synthetischem Material hergestellt sind.

3. Maschine zur Veredelung nach Anspruch 1, bei der die Oberflächen im Inneren der Verarbeitungskammer und/oder die Oberflächen der rotierenden Walzen mit einer Beschichtung aus Stein oder einem lebensmittelverträglichen synthetischem Material hergestellt sind.

4. Maschine zur Veredelung nach Anspruch 1, bei der der Deckel der zylindrischen Verarbeitungskammer eine untere Öffnung (123) aufweist, die mit einem Hahn (124) verbunden ist.

5. Maschine zur Veredelung nach Anspruch 1, die mit einem Elektromotor ausgestattet ist, der mit der Drehwelle verbunden ist, wobei die Rotationsgeschwindigkeit durch eine logische Schaltung gesteuert wird, die vom Benutzer programmiert werden kann, und zwar mittels eines Mikroprozessors mit einer Benutzerschnittstelle für die Dateneingabe, auch durch Berührung.

6. Maschine zur Veredelung nach Anspruch 5, bei der die logische Schaltung den Temperatursensor und den elektrischen Widerstandssensor an der zylindrischen Verarbeitungskammer steuert.

7. Maschine zur Veredelung nach Anspruch 1, bei der die Bewegungsbahn der Drehwelle für den Ausstoß der streichfähigen Creme aus der entsprechenden unteren Öffnung des zylindrischen Verarbeitungskammerdeckels umkehrbar ist.

8. Maschine zur Veredelung nach Anspruch 1, die im Außengehäuse mit speziellen Seitenschlitzen für den Luftaustausch zwischen außen und innen (125)(126) ausgestattet ist.

9. Maschine zur Veredelung nach Anspruch 1, die mit einer mechanischen Vorrichtung ausgestattet ist, die mittels eines Hebels auf der dem Seitendeckel der zylindrischen Verarbeitungskammer gegenüberliegenden Seite den Maschinenkörper in Bezug auf die Arbeitsfläche um einen Winkel von maximal 30 Grad (130) kippen kann.

## Revendications

1. Machine de raffinage pour broyage de matières brutes telles que des graines et/ou des substances végétales en granulés pour confectionner des pâtes à tartiner et/ou des émulsions, composée d'un châssis métallique de forme parallélépipédique et équipée d'une ouverture supérieure reliée à une trémie conique amovible et d'une chambre de traitement des matières brutes dans laquelle :
a. la chambre de traitement des matières brutes (30) est constituée d'un corps métallique cylindrique fermé sur un côté, avec un diamètre compris entre 20 cm et 50 cm, plutôt 35 cm, et une longueur comprise entre 10 cm et 35 cm, plutôt 20 cm.
b. l'axe longitudinal de la chambre de traitement cylindrique est placé horizontalement à la surface de travail,
c. la chambre de traitement cylindrique est équipée d'une résistance électrique et d'un ou plusieurs capteurs de température.
d. le côté fermé de la chambre de traitement cylindrique dispose d'une ouverture centrale dans laquelle un arbre de rotation (40) est fixé à l'aide d'un insert anti-friction,
e. un arbre creux cylindrique est placé concentriquement sur l'arbre de rotation,
f. l'arbre creux cylindrique est intégré à trois dessus de segments vides (51)(52)(53) espacés d'un angle de 120° (55),
g. trois ressorts mécaniques élastiques (60) sont fixés à l'intérieur des trois segments vides (51)(52)(53),
h. trois pivots (70) sont montés à l'intérieur des dessus de segments vides, fixés à l'aide des ressorts mécaniques élastiques placés entre le segment vide et le pivot, de sorte que le ressort mécanique élastique puisse le pousser vers l'extérieur,
i. un segment orthogonal est intégré à la tête de chaque pivot (70), au-dessus de ces derniers, deux rouleaux rotatifs (74) (75) sont fixés à l'aide de deux inserts anti-friction,
j. la distance entre le centre de l'arbre de rotation et la surface externe des rouleaux rotatifs permet de comprimer les ressorts mécaniques élastiques placés entre le segment vide et le pivot,
k. le côté ouvert de la chambre de traitement cylindrique est fermé à l'aide d'un couvercle conçu pour s'adapter au-dessus de l'arbre de rotation,
l. à proximité du dessus de l'arbre de rotation et à l'intérieur de la chambre cylindrique, au moins deux lames de raclage (90) (91) sont fixées à l'aide de deux segments de métal ou matériau synthétique, poussées vers l'extérieur par au moins un ressort mécanique (92).
m. la lame de raclage fonctionnant à proximité du couvercle de la chambre de traitement cylindrique est installée de sorte qu'un côté de ladite lame soit tangent à la surface du couvercle,
n. la lame fonctionnant du côté fermé de la chambre de traitement cylindrique est installée de sorte à être tangente à la surface du côté fermé de la chambre de traitement cylindrique.

2. Machine de raffinage visée à la Revendication 1, dans laquelle les rouleaux rotatifs se composent de métal, de pierre ou d'un autre matériau synthétique compatible avec une utilisation alimentaire.

3. Machine de raffinage visée à la Revendication 1, dans laquelle la surface interne de la chambre de traitement cylindrique et/ou la surface des rouleaux rotatifs est équipée d'un revêtement en pierre ou matériau synthétique compatible avec une utilisation alimentaire.

4. Machine de raffinage visée à la Revendication 1, dans laquelle le couvercle de la chambre de traitement cylindrique dispose d'un orifice inférieur (123) raccordé à un robinet (124).

5. Machine de raffinage visée à la Revendication 1 équipée d'un moteur électrique raccordé à l'arbre de rotation dans lequel la vitesse de rotation est contrôlée par un circuit logique programmable par l'utilisateur via un microprocesseur avec interface utilisateur tactile permettant la saisie des données.

6. Machine de raffinage visée à la Revendication 5 dans laquelle le circuit logique gère le capteur de température et le capteur à résistance électrique sur la chambre de traitement cylindrique.

7. Machine de raffinage visée à la Revendication 1 dans laquelle la trajectoire de mouvement de l'arbre de rotation peut être inversée afin d'expulser la pâte à tartiner depuis l'orifice inférieur approprié situé sur le couvercle de la chambre de traitement cylindrique.

8. Machine de raffinage visée à la Revendication 1 équipée, au niveau du châssis externe, de fentes latérales spéciales permettant l'échange d'air entre l'extérieur et l'intérieur (125)(126).

9. Machine de raffinage visée à la Revendication 1 équipée d'une prédisposition mécanique via un levier situé sur le côté opposé à celui du couvercle latéral de la chambre de traitement cylindrique, permettant d'incliner le corps de la machine à un angle de 30 degrés maximum par rapport à la surface de travail (130).
